# FASCICULE DE BREVET EUROPEEN

(11) **EP 1 308 356 B1**
(45) Date de publication et mention de la délivrance du brevet: **15.09.2004**
(21) Numéro de dépôt: 02356216.8
(22) Date de dépôt: 30.10.2002
(51) Int. Cl.: B60R 25/02, B62D 5/04

(54) **Dispositif antivol pour véhicule automobile à direction assistée électrique**
Diebstahlsicherung für Kraftfahrzeuge mit elektrischer Servolenkung
Antitheft device for a motor vehicle with electric power steering

(30) Priorité: 31.10.2001 FR 0114152
(43) Date de publication de la demande: 07.05.2003
(73) Titulaire: Société de Mécanique d'Irigny, 69540 Irigny (FR)
(72) Inventeur: Reynard, Bruno, 69008 Lyon (FR)
(74) Mandataire: Bratel, Gérard

(56) Documents cités:
- EP-A- 0 630 800
- FR-A- 2 793 749
- PATENT ABSTRACTS OF JAPAN vol. 2000, no. 25, 12 avril 2001 (2001-04-12) & JP 2001 219816 A (TOYODA MACH WORKS LTD), 14 août 2001 (2001-08-14)

## Description

La présente invention concerne, d'une façon générale, les véhicules automobiles équipés d'une direction assistée de type électrique. Elle se rapporte, plus particulièrement, à un dispositif antivol assurant le blocage du système de direction d'un tel véhicule, lorsque celui-ci est inutilisé, en vue d'en interdire tout usage non autorisé.

Dans un véhicule automobile à direction assistée électrique, il est prévu un moteur électrique d'assistance qui est relié, par un mécanisme de transmission multiplicateur de couple, à un élément mobile du système de direction reliant le volant de conduite aux roues directrices du véhicule.

Pour de tels véhicules, la fonction "antivol" est habituellement réalisée d'une manière entièrement indépendante du dispositif d'assistance, par un dispositif de blocage en rotation de la colonne de direction, situé entre le volant et le cardan haut de la colonne de direction. Cette solution conserve un certain nombre d'inconvénients :
- Le dispositif antivol, monté sur la partie haute de la colonne de direction, est relativement encombrant.
- En raison de sa position, ce dispositif antivol reste assez facilement accessible depuis l'extérieur, de sorte qu'il ne procure pas une sécurité optimale.
- Dans la mesure où il agit directement sur la colonne de direction, le dispositif antivol doit exercer un effort de blocage important, ce qui impose aussi une réalisation volumineuse et par conséquent coûteuse.
- Pour pouvoir obtenir un blocage en rotation du volant dans des positions angulaires multiples, ce qui est souhaitable, le dispositif antivol doit être réalisé avec un manchon à rainures multiples, en pratique six à huit rainures, pouvant chacune recevoir un organe mobile de blocage, ce qui complique et renchérit encore la réalisation du dispositif antivol.

Pour éviter ces inconvénients, il a déjà été proposé des dispositifs antivol plus compacts, plus économiques et mieux sécurisés, associés non plus à la colonne de direction, mais à l'ensemble constitué par le moteur électrique d'assistance et par le mécanisme de transmission multiplicateur de couple, qui relie le moteur électrique d'assistance à un élément mobile de la direction. Plus particulièrement, ces dispositifs antivol sont réalisés avec un organe mobile de blocage, déplaçable au moyen d'un actionneur et coopérant avec un organe lié au mécanisme de transmission précité, et notamment coaxial à l'arbre du moteur électrique d'assistance. A titre d'exemples de dispositifs antivol conçus selon ce principe, il est fait référence ici aux documents EP 0630800, FR 2793749 et JP 2001-219816.

En pratique, l'organe mobile de blocage, déplacé par un actionneur, coopére avec un organe rotatif pourvu d'au moins une encoche périphérique, prévue pour l'engagement de cet organe mobile de blocage. L'organe rotatif peut se présenter comme une bague ou une roue ou une simple portion d'arbre, pouvant être coaxiale au moteur électrique d'assistance et à la vis sans fin habituelle de mécanisme de transmission multiplicateur de couple.

Un tel dispositif antivol, pour véhicule automobile à direction assistée électrique, possède les avantages importants suivants :
- Le dispositif antivol n'étant plus monté sur la colonne de direction, cette colonne devient plus compacte, et aussi moins agressive en cas d'accident.
- Compte tenu du point où agit l'organe de blocage, l'effort de blocage se trouve amplifié par le mécanisme multiplicateur de couple, ce qui permet une action de blocage efficace avec un effort initial moindre que celui à exercer sur l'axe de la colonne de direction, dans la solution antérieure.
- Le dispositif antivol est de structure simple, le nombre de pièces constitutives étant réduit.
- En conséquence des spécificités précédentes, ce dispositif antivol s'avère particulièrement économique.
- Mettant à profit la démultiplication de mouvement procurée par le mécanisme multiplicateur de couple, le dispositif antivol offre des positions angulaires multiples de blocage du volant (par exemple une dizaine de positions par tour), dans des positions plus nombreuses que celles actuellement obtenues (six à huit), avec des pièces plus simples, en particulier un organe rotatif du genre bague comportant seulement une ou deux encoches périphériques.
- Se trouvant intégré à l'ensemble constitué par le moteur électrique d'assistance et par le mécanisme de transmission multiplicateur de couple, le dispositif antivol objet de l'invention est entièrement fermé, et inaccessible depuis l'extérieur, ce qui le rend pratiquement inviolable.
- De plus, le dispositif antivol est applicable, sans aucune difficulté, à divers types de directions assistées électriques. En particulier, ce dispositif antivol peut être associé à un ensemble "moteur électrique d'assistance et mécanisme de transmission multiplicateur de couple" agissant sur la colonne de direction, ou agissant sur le pignon de direction en prise avec la crémaillère, ou encore agissant directement sur la crémaillère de la direction.

Toutefois, si un tel dispositif antivol est réalisé sans limiteur de couple (cas du document précité JP 2001-219816), il existe un risque de rupture de pièces mécaniques, en cas de tentative d'utilisation non autorisée du véhicule.

Dans le cas des deux autres documents précités, à savoir EP 0630800 et FR 2793749, un limiteur de couple est prévu. Plus particulièrement, le mécanisme de transmission multiplicateur de couple étant un réducteur à vis sans fin et roue tangente, ces documents prévoient que le limiteur de couple est associé à la roue tangente du réducteur.

Une telle localisation du limiteur de couple comporte encore des inconvénients :
- Les efforts étant relativement élevés au niveau de la roue tangente, les dimensions de la pièce ou des éléments constituant le limiteur de couple sont importants, ce qui augmente l'encombrement et les coûts du dispositif antivol.
- Situé au niveau de la roue tangente, le limiteur de couple doit, en outre, être dimensionné de manière à pouvoir transmettre tout le couple de la direction assistée, ce qui peut être complètement contradictoire avec les exigences imposées pour la seule fonction "antivol".
- En cas de rupture de la pièce ou des éléments constituant le limiteur de couple, on se trouve dans une situation de défaillance critique, entraînant la perte totale de la fonction d'assistance de la direction.

La présente invention vise à remédier aussi à ces derniers inconvénients, en fournissant un dispositif antivol du genre concerné, pour véhicule automobile à direction assistée électrique, qui soit perfectionné en ce qui concerne le limiteur de couple, dans le sens d'une réduction d'encombrement, d'un dimensionnement mieux adapté, et d'une suppression de tout risque de défaillance critique.

A cet effet, l'invention a pour objet un dispositif antivol pour véhicule automobile, équipé d'une direction assistée électrique, avec un moteur électrique d'assistance relié, par un mécanisme de transmission multiplicateur de couple, à un élément mobile de système de direction reliant le volant de conduite aux roues directrices du véhicule, tandis que le dispositif antivol est prévu pour le blocage d'un organe mobile de la direction, ledit dispositif antivol comprenant un organe mobile de blocage, déplaçable au moyen d'un actionneur et coopérant avec un organe lié au mécanisme de transmission précité et coaxial à l'arbre du moteur électrique d'assistance, le dispositif antivol étant caractérisé en ce que l'organe, avec lequel coopère l'organe mobile de blocage, est lié coaxialement en rotation avec l'arbre du moteur électrique d'assistance par l'intermédiaire d'un moyen limiteur de couple.

Dans une forme de réalisation préférée du dispositif antivol selon l'invention, l'organe mobile de blocage coopère avec un organe rotatif du genre bague pourvu d'au moins une encoche périphérique, prévue pour l'engagement de l'organe mobile de blocage, le limiteur de couple étant constitué par une bague de friction intercalée entre la bague et un manchon d'accouplement lié à l'arbre du moteur électrique d'assistance.

Dans la mesure où le mécanisme de transmission multiplicateur de couple est habituellement un réducteur à vis sans fin et roue tangente, le dispositif de blocage du limiteur de couple agit avantageusement au niveau du manchon d'accouplement entre l'arbre du moteur électrique d'assistance et une vis sans fin du mécanisme de transmission multiplicateur de couple.

Ainsi, l'idée à la base de l'invention consiste à situer le limiteur de couple non pas au niveau de la roue tangente du réducteur, mais du côté de l'arbre de sortie du moteur électrique d'assistance. De plus, ce limiteur de couple ne s'intercale pas dans la chaîne cinématique de transmission du mouvement et du couple entre le moteur électrique d'assistance et la direction ; il se trouve intercalé entre cette chaîne cinématique de transmission et les organes de blocage formant le dispositif antivol proprement dit, et extérieurs à ladite chaîne cinématique.

Ainsi, l'invention procure les avantages suivants :
- En raison d'efforts plus faibles au niveau de l'arbre du moteur électrique d'assistance, la dimension de la pièce, notamment de la bague, constituant le limiteur de couple peut être réduite, ainsi que son coût.
- La pièce, notamment la bague, constituant le limiteur de couple, peut être strictement dimensionnée pour surmonter le couple de blocage du dispositif antivol, son dimensionnement n'étant pas dépendant du couple à transmettre par le moteur d'assistance à la direction.
- En cas de rupture de la pièce, notamment de la bague, constituant le limiteur de couple, on ne se trouve pas dans un cas de défaillance critique, mais seulement dans un cas de perte de la fonction "antivol", sans aucune perte de la fonction d'assistance de la direction.

Ainsi, la solution de la présente invention évite les inconvénients des propositions antérieures, qui situent le limiteur de couple au niveau de la roue tangente du réducteur.

L'invention sera mieux comprise à l'aide de la description qui suit, en référence au dessin schématique annexé représentant, à titre d'exemple, une forme d'exécution de ce dispositif antivol pour véhicule automobile à direction assistée électrique :
Figure 1 est une vue d'ensemble, très schématique, d'un système de direction pourvu d'un dispositif antivol conforme à l'invention ;
Figure 2 représente l'ensemble "moteur électrique d'assistance et dispositif de transmission multiplicateur de couple", avec les organes associés constituant le dispositif antivol ;
Figure 3 est une vue en coupe de ce dispositif antivol, suivant III-III de figure 2.

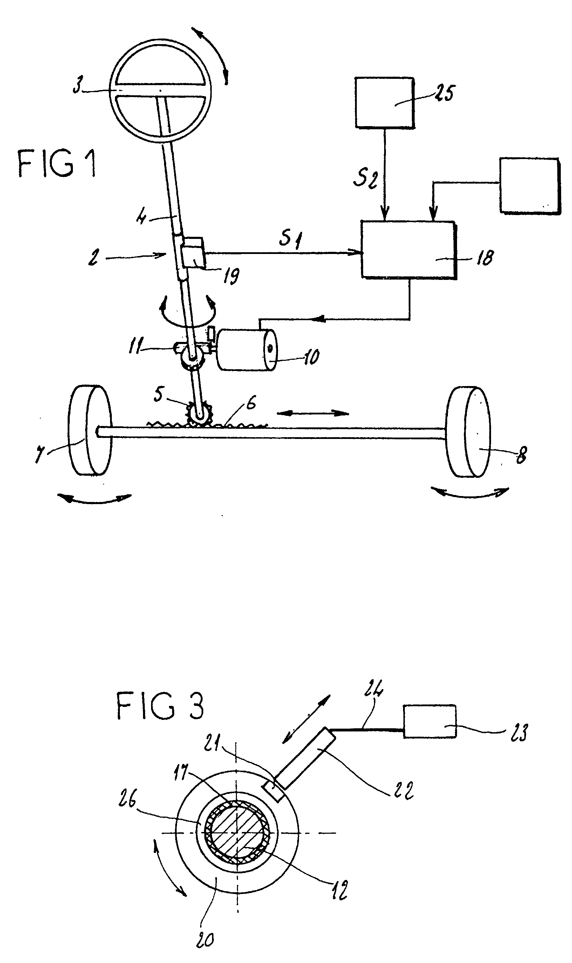

La figure 1 montre les éléments habituels d'une direction 2 de véhicule automobile, à savoir un volant de conduite 3 lié à une extrémité d'une colonne de direction 4, dont l'extrémité opposée porte un pignon de direction 5 venant en prise avec une crémaillère 6. Les deux extrémités de la crémaillère 6 sont respectivement liées, par l'intermédiaire de biellettes, à deux roues directrices 7 et 8 du véhicule concerné.

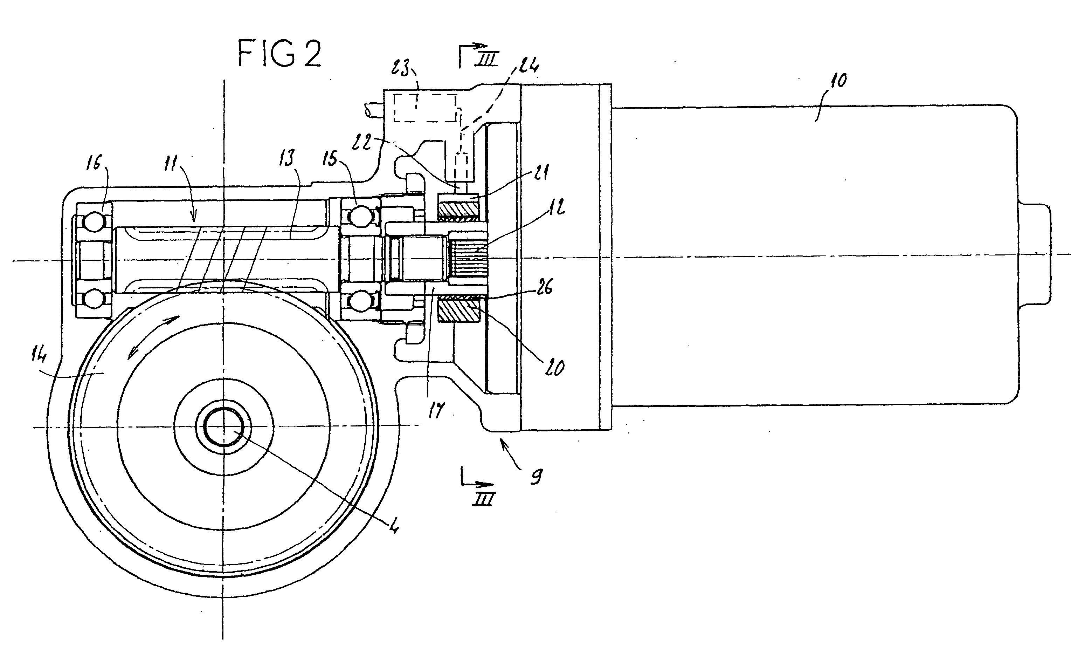

S'agissant ici d'une direction assistée électrique, il est prévu un ensemble 9 composé d'un moteur électrique d'assistance 10, et d'un mécanisme de transmission 11 intercalé entre le moteur électrique 10 et la colonne de direction 4 - voir aussi la figure 2.

Le moteur électrique d'assistance 10 est un moteur à deux sens de rotation, dont l'arbre 12 est accouplé à l'entrée du mécanisme de transmission 11, qui sert de réducteur de vitesse et de multiplicateur de couple. Dans l'exemple illustré, ce mécanisme 11 est un réducteur à vis sans fin 13 et roue tangente 14. La vis sans fin 13, montée tournante dans des paliers 15 et 16, est coaxiale à l'arbre 12 du moteur électrique 10, et elle est liée en rotation à cet arbre 12 par l'intermédiaire d'un manchon d'accouplement 17. La roue tangente 14, en prise avec la vis sans fin 13, est liée en rotation à la colonne de direction 4 (dans l'exemple illustré au dessin). Un couple moteur peut ainsi être transmis à la colonne de direction 4, à partir du moteur électrique d'assistance 10.

De manière généralement connue, le moteur électrique d'assistance 10 est piloté par un calculateur électronique 18 qui reçoit, entre autres, un signal S1 issu d'un capteur 19 de couple résistant, placé sur la colonne de direction 4.

En se référant plus particulièrement aux figures 2 et 3, l'ensemble 9 comprenant le moteur électrique d'assistance 10 et le mécanisme de transmission 11 incorpore aussi un dispositif de blocage, à fonction "antivol". Ce dispositif de blocage agit au niveau du manchon d'accouplement 17 entre l'arbre 12 du moteur électrique 10 et la vis sans fin 13.

Le dispositif de blocage comprend, d'une part, un organe rotatif 20 du genre bague, monté coaxialement autour du manchon d'accouplement 17, et lié en rotation à ce dernier. La bague 20 présente, à sa périphérie, une encoche 21 ouverte vers l'extérieur, ou deux telles encoches diamétralement opposées, ou des encoches encore plus nombreuses.

Le dispositif de blocage comprend, d'autre part, un organe mobile de blocage 22, situé face à la périphérie de la bague 20, et prévu pour coopérer avec celle-ci. Le déplacement de l'organe mobile de blocage 22 est commandé par un actionneur 23, par exemple un actionneur électrique, par l'intermédiaire d'un organe de transmission 24.

Ce dispositif de blocage est commandé par l'émission d'un signal S2, émis depuis un dispositif 25 capable d'identifier une clé ou une carte électronique codée, détenue par l'utilisateur autorisé du véhicule.

En fonction du signal S2, interprété par le calculateur électronique 18, l'actionneur 23 est activé et commande le déplacement de l'organe mobile de blocage 22, dans un sens ou dans l'autre. Ainsi, l'organe de blocage 22 peut être poussé vers la bague 20, et introduit dans l'encoche 21 (ou l'une des encoches) de cette bague 20, ce qui immobilise en rotation la bague 20, donc aussi la colonne de direction 4 par l'intermédiaire du mécanisme de transmission 11.

A l'inverse, si l'actionneur 23 déplace l'organe de blocage 22 en l'éloignant de la bague 20, l'organe de blocage 22 est extrait de l'encoche 21 de la bague 20. Cette dernière se trouve alors libérée, et la direction 2 n'est plus bloquée.

Comme le montre notamment la figure 3, une bague de friction 26, constituant un moyen limiteur de couple, est intercalée entre la bague 20 avec encoche 21 et le manchon 17, de manière à éviter la rupture de pièces mécaniques, en cas de tentative d'utilisation non autorisée du dispositif.

L'on ne s'éloignerait pas du cadre de l'invention, telle que définie dans les revendications annexées, en modifiant :
- la forme de l'organe mobile de blocage 22, et le type de mouvement (translation ou rotation) décrit par cet organe 22 ;
- le type de l'actionneur 23, électrique ou autre, utilisé pour déplacer l'organe mobile de blocage 22 ;
- le point d'implantation de l'organe tel que bague 20, qui coopère avec l'organe mobile de blocage 22, ladite bague pouvant être placée aussi, par exemple : directement sur l'arbre 12 du moteur électrique d'assistance 10, ou sur la vis sans fin 13 ;
- en adaptant le dispositif antivol à un mécanisme de transmission 11 autre qu'à vis sans fin et roue tangente ;
- en destinant ce dispositif antivol à des véhicules avec direction assistée électrique d'un autre type, en particulier une direction dans laquelle l'ensemble 9, composé du moteur électrique 10 et du mécanisme de transmission 11, agit sur le pignon de direction 5, ou bien agit directement sur la crémaillère 6.

## Revendications

1. Dispositif antivol pour véhicule automobile, équipé d'une direction assistée électrique (2), avec un moteur électrique d'assistance (10) relié, par un mécanisme de transmission (11) multiplicateur de couple, à un élément mobile (4) de système de direction reliant le volant de conduite (3) aux roues directrices (7,8) du véhicule, tandis que le dispositif antivol est prévu pour le blocage d'un organe mobile de la direction (2), ledit dispositif antivol comprenant un organe mobile de blocage (22), déplaçable au moyen d'un actionneur (23) et coopérant avec un organe (20) lié au mécanisme de transmission (11) précité et coaxial à l'arbre (12) du moteur électrique d'assistance (10), **caractérisé en ce que** l'organe (20), avec lequel coopère l'organe mobile de blocage (22), est lié coaxialement en rotation avec l'arbre (12) du moteur électrique d'assistance (10) par l'intermédiaire d'un moyen limiteur de couple (26).

2. Dispositif antivol selon la revendication 1, **caractérisé en ce que** l'organe mobile de blocage (22) coopère avec un organe rotatif (20) du genre bague pourvu d'au moins une encoche périphérique (21), prévue pour l'engagement de l'organe mobile de blocage (22), le limiteur de couple étant constitué par une bague de friction (26) intercalée entre la bague (20) et un manchon d'accouplement (17) lié à l'arbre (12) du moteur électrique d'assistance (10).

3. Dispositif antivol selon la revendication 2, **caractérisé en ce que** le dispositif de blocage avec limiteur de couple (26) agit au niveau du manchon d'accouplement (17) entre l'arbre (12) du moteur électrique d'assistance (10) et une vis sans fin (13) du mécanisme de transmission (11) multiplicateur de couple.

4. Dispositif antivol selon l'une quelconque des revendications 1 à 3, **caractérisé en ce qu'**il est associé à un ensemble (9) "moteur électrique d'assistance (10) et mécanisme de transmission (11) multiplicateur de couple" agissant sur la colonne de direction (4).

5. Dispositif antivol selon l'une quelconque des revendications 1 à 3, **caractérisé en ce qu'**il est associé à un ensemble (9) "moteur électrique d'assistance (10) et mécanisme de transmission (11) multiplicateur de couple" agissant sur le pignon de direction (5) en prise avec la crémaillère (6).

6. Dispositif antivol selon l'une quelconque des revendications 1 à 3, **caractérisé en ce qu'**il est associé à un ensemble (9) "moteur électrique d'assistance (10) et mécanisme de transmission (11) multiplicateur de couple" agissant directement sur la crémaillère (6) de la direction.

## Patentansprüche

1. Diebstahlsicherungsvorrichtung für ein Kraftfahrzeug, das mit einer elektrischen Servolenkung (2) mit einem elektrischen Hilfsmotor (10) ausgestattet ist, der über eine Drehmomentvervielfacherkraftübertragungseinrichtung (11) mit einem beweglichen Lenksystemteil (4) verbunden ist, welches das Lenkrad (3) mit den Leiträdern (7, 8) des Fahrzeugs verbindet, während die Diebstahlsicherungsvorrichtung zum Blockieren eines beweglichen Glieds der Lenkung (2) vorgesehen ist, wobei die Diebstahlsicherungsvorrichtung ein bewegliches Blockierungsglied (22) umfasst, das mittels eines Betätigungsglieds (23) verschiebbar ist und mit einem Glied (20) zusammenwirkt, das mit der vorgenannten Kraftübertragungseinrichtung (11) verbunden und zur Welle (12) des elektrischen Hilfsmotors (10) koaxial ist, **dadurch gekennzeichnet, dass** das Glied (20), mit welchem das bewegliche Blockierungsglied (22) zusammenwirkt, mit der Welle (12) des elektrischen Hilfsmotors (10) mittels einer Drehmomentbegrenzereinrichtung (26) koaxial drehfest verbunden ist.

2. Diebstahlsicherungsvorrichtung nach Anspruch 1, **dadurch gekennzeichnet, dass** das bewegliche Blockierungsglied (22) mit einem umlaufenden Glied (20) von der Art eines Rings zusammenwirkt, der mit mindestens einer Umfangsnut (21) versehen ist, die für das Eingreifen des beweglichen Blockierungsglieds (22) vorgesehen ist, wobei der Drehmomentbegrenzer aus einem Reibungsring (26) besteht, der zwischen dem Ring (20) und einer Kupplungsmuffe (17) eingeschoben ist, die mit der Welle (12) des elektrischen Hilfsmotors (10) verbunden ist.

3. Diebstahlsicherungsvorrichtung nach Anspruch 2, **dadurch gekennzeichnet, dass** die Blockierungsvorrichtung mit dem Drehmomentbegrenzer (26) im Bereich der Kupplungsmuffe (17) zwischen der Welle (12) des elektrischen Hilfsmotors (10) und einer Schnecke (13) der Drehmomentvervielfacherkraftübertragungseinrichtung (11) wirkt.

4. Diebstahlsicherungsvorrichtung nach einem der Ansprüche 1 bis 3, **dadurch gekennzeichnet, dass** sie einer Einheit (9) aus "elektrischem Hilfsmotor (10) und Drehmomentvervielfacherkraftübertragungseinrichtung (11)" zugeordnet ist, die auf die Lenksäule (4) einwirkt.

5. Diebstahlsicherungsvorrichtung nach einem der Ansprüche 1 bis 3, **dadurch gekennzeichnet, dass** sie einer Einheit (9) aus "elektrischem Hilfsmotor (10) und Drehmomentvervielfacherkraftübertragungseinrichtung (11)" zugeordnet ist, die auf das mit der Zahnstange (6) in Eingriff befindliche Lenkritzel (5) einwirkt.

6. Diebstahlsicherungsvorrichtung nach einem der Ansprüche 1 bis 3, **dadurch gekennzeichnet, dass** sie einer Einheit (9) aus "elektrischem Hilfsmotor (10) und Drehmomentvervielfacherkraftübertragungseinrichtung (11)" zugeordnet ist, die direkt auf die Zahnstange (6) der Lenkung einwirkt.

## Claims

1. An anti-theft device for an automobile vehicle which is equipped with an electric power-assisted steering system (2), comprising an electric power-assistance motor (10) which is connected by a torque multiplying transmission mechanism (11) to a moveable steering system element (4) which connects the steering wheel (3) to the steered wheels (7, 8) of the vehicle, whereas the anti-theft device is provided for locking a moveable element of the steering (2), said anti-theft device comprising a moveable locking element (22) which can be displaced by means of an actuator (23) and which cooperates with an element (20) which is attached to said transmission mechanism (11) and which is coaxial with the shaft (12) of the electric power-assistance motor (10), **characterised in that** the element (20) with which the moveable locking element (22) cooperates is attached coaxially in rotation to the shaft (12) of the electric power-assistance motor (10) via a torque limiter means (26).

2. An anti-theft device according to claim 1, **characterised in that** the moveable locking element (22) cooperates with a ring-type rotating element (20) which comprises at least one peripheral recess (21) which is provided for the engagement of the moveable locking element (22), the torque limiter being formed by a friction ring (6) which is interposed between the ring (20) and a coupling sleeve (17) attached to the shaft (12) of the electric power-assistance motor (10).

3. An anti-theft device according to claim 2, **characterised in that** the locking device with the torque limiter (26) acts on the coupling sleeve (17) between the shaft (12) of the electric power-assistance motor (10) and a worm gear (13) of the torque multiplying transmission mechanism (11).

4. An anti-theft device according to any one of claims 1 to 3, **characterised in that** it is associated with an "electric power-assistance motor (10) and torque multiplying transmission mechanism (11)" system (9) which acts on the steering column (4).

5. An anti-theft device according to any one of claims 1 to 3, **characterised in that** it is associated with an "electric power-assistance motor (10) and torque multiplying transmission mechanism (11)" system (9) which acts on the steering pinion (5) in mesh with the rack (6).

6. An anti-theft device according to any one of claims 1 to 3, **characterised in that** it is associated with an "electric power-assistance motor (10) and torque multiplying transmission mechanism (11)" system (9) which acts directly on the steering rack (6).
